# EUROPEAN PATENT APPLICATION

(11) **EP 2 752 914 A2**
(43) Date of publication of application: **09.07.2014**
(21) Application number: 12827385.1
(22) Date of filing: 31.08.2012
(51) Int. Cl.: H01M 2/08

(54) **SECONDARY BATTERY HAVING IMPROVED LONG-TERM RELIABILITY AGAINST MOISTURE PENETRATION**

(30) Priority: 31.08.2011 KR 20110087808; 31.08.2011 KR 20120096130
(71) Applicant: LG Chem, Ltd., Seoul 150-721 (KR)
(72) Inventor: KIM, Yo-Jin, Daejon 305-380 (KR); CHOI, Seung-Don, Daejeon 305-380 , (KR); PARK, Sung-Joon, Daejon 305-380 , (KR)
(74) Representative: Cabinet Plasseraud
(86) International application number: PCT/KR2012/006979
(87) International publication number: WO 2013/032266

(57) **Abstract**

Disclosed is a secondary battery with improved long-term reliability for humidity penetration. The pouch-type secondary battery includes an electrode assembly to which an electrode lead is attached, and a pouch package accommodating the electrode assembly so that the electrode lead is partially exposed outwards, the pouch package having a sealing portion formed along an edge thereof, wherein the sealing portion has a characteristic length of 10 to 19 mm²/mm. Since a characteristic length of a sealing portion of a pouch-type secondary battery is restricted to a predetermined range, it is possible to improve long-term reliability of the secondary battery for humidity penetration while suppressing the decrease of capacity of the secondary battery, caused by the area occupied by the sealing portion, to the minimum.

## Description

### TECHNICAL FIELD

The present disclosure relates to a secondary battery, and more particularly, to a secondary battery with improved long-term reliability for humidity penetration.

The present application claims priority to Korean Patent Application No. 10-2011-0087808 filed in the Republic of Korea on August 31, 2011 and Korean Patent Application No. 10-2012-0096130 filed in the Republic of Korea on August 31, 2012, the disclosures of which are incorporated herein by reference.

### BACKGROUND ART

With active use of potable electric products such as video cameras, cellular phones, portable PC or the like, secondary batteries mostly used as power sources of such products are becoming much more important. In particular, lithium secondary batteries are more actively used since they have high energy density per unit weight and allow rapid charging, in comparison to other kinds of secondary batteries such as lead storage batteries, nickel-cadmium batteries, nickel-hydrogen batteries, nickel-zinc batteries or the like.

Unlike a primary battery generally that is not chargeable, a secondary battery is chargeable and dischargeable. Such a secondary battery is being actively studied due to the development of high-tech products such as digital cameras, cellular phones, laptops, power tools, electric bicycles, electric vehicles, hybrid vehicles, large-capacity power storage devices or the like.

A secondary battery may be classified into a nickel-cadmium battery, a nickel-metal hydride battery, a nickel-hydrogen battery, a lithium secondary battery or the like. Among them, a lithium secondary battery has an operating voltage of about 3.6 V and is used as a power source of a portable electronic device or several lithium secondary batteries are connected in series and used for high-power electric vehicles, hybrid vehicles, power tools, electric bicycles, power storages, UPS or the like. Due to a lithium secondary battery having an operating voltage three times higher than that of a nickel-cadmium battery or a nickel-metal hydride battery and also having an excellent energy density per unit weight, the use of a lithium secondary battery is rapidly growing.

A lithium secondary battery may be classified into a lithium ion battery using a liquid electrolyte and a lithium ion polymer battery using a polymer solid electrolyte depending on the kind of electrolyte. In addition, a lithium ion polymer battery may be classified into a solid-phase lithium ion polymer battery containing no electrolyte and a lithium ion polymer battery using a gel-type polymer electrolyte containing an electrolyte, depending on the kind of polymer solid electrolyte.

In most cases, the lithium ion battery using a liquid electrolyte uses a cylindrical or rectangular metal can as a container, which is sealed by welding. Since the can-type secondary battery using such a metal can has a fixed shape, the design of an electric product is limited and is difficult to reduce in volume. Therefore, a pouch-type secondary battery where an electrode assembly and an electrolyte are put into a pouch package made of a film and then sealed has been developed and used.

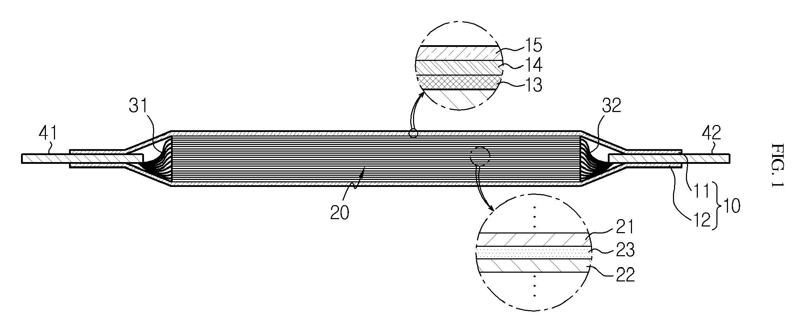

Fig. 1 is a cross-sectional view showing a general pouch-type secondary battery. As shown in Fig. 1, the pouch package 10 includes a lower sheet 12 and an upper sheet 11 covering the lower sheet.

An electrode assembly 20 provided between the upper sheet 11 and the lower sheet 12 includes a cathode plate 21, an anode plate 22 and a separator 23, which are stacked in a predetermined pattern.

The electrode assembly 20 is a power generation device where the cathode plate 21 and the anode plate 22 are stacked in order with the separator 23 being interposed between them. The electrode assembly 20 has a stacking-type, jelly-roll type or stacking/folding structure.

A secondary battery including the jelly-roll type electrode assembly 20 is disclosed in, for example, Korean Patent Publication No. 2009-88761 (entitled "Secondary battery including a jelly-roll type electrode assembly") and Korean Patent Publication No. 2007-47377 (entitled "Rectangular secondary battery including a jelly-roll type electrode assembly"). In addition, the electrode assembly 20 of a stacking/folding structure or a secondary battery including the electrode assembly 20 are disclosed in, for example, Korean Patent Publication No. 2008-36250 (entitled "Mixed stacking and folding electrode assembly and a secondary battery having the same) and Korean Patent Registration No. 0987300 (entitled "Stacking-folding electrode assembly and its manufacturing method).

The electrode assembly 20 includes a cathode tab 31 and an anode tab 32 respectively extending from the cathode plate 21 and the anode plate 22, and a cathode lead 41 and an anode lead 42 respectively bonded to the cathode tab 31 and the anode tab 32 by welding. Here, the cathode lead 41 and the anode lead 42 are used for electric connection to an exterior load or another secondary battery, and their ends are exposed out of the pouch package 10. Though not shown in the figure, adhesive tapes may be provided at adhesion interfaces of the electrode leads 41, 42 and the pouch package 10 in order to enhance the adhesive force between the leads and the pouch package 10 when the electrode leads 41, 42 and the pouch package 10 are sealed.

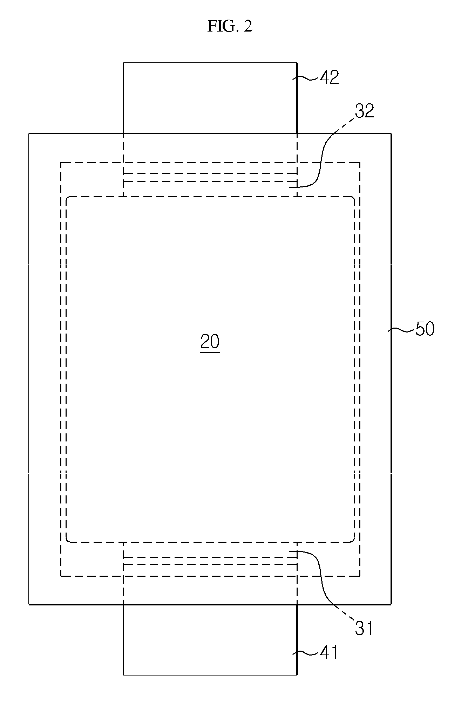

If the electrode assembly 20 is accommodated in the pouch package 10 and then the upper sheet 11 is thermally bonded to the lower sheet 12, a sealing portion 50 is formed at an edge of the pouch package 10 as shown in Fig. 2. A film of the pouch package 10 has a following sectional structure.

In other words, as shown in Fig. 1, the pouch package 10 has a multilayered structure stacked in the order of a polyolefin layer serving as a thermal bonding layer 13 having a thermal bonding property and playing a role of sealant, an aluminum layer (AL) serving as a metal layer 14 to play a role of a substrate maintaining a mechanical strength and a barrier layer against humidity and oxygen, and an exterior layer 15 (generally, a nylon layer) serving as a substrate and a protective layer. As the polyolefin layer, cast polypropylene (CPP) is commonly used.

However, the thermal bonding portion of the pouch package 10 is weak against exterior humidity penetration. Therefore, in long term, penetration of humidity is unavoidable, and the penetrating humidity reacts with anions of LiPF₆ included in an electrolyte and generates HF, which results in degradation of anode active material. The degradation of anode active material increases an internal resistance of the secondary battery. If the internal resistance increases excessively, the performance of the secondary battery deteriorates so that the secondary battery may no longer be used.

The pouch-type secondary battery may have flexibility in its shape and capacity with smaller volume and weight. However, different from a can-type secondary battery, the pouch-type secondary battery uses a soft pouch as a container, which may result in weak mechanical strength and lower sealing reliability. Therefore, the pouch-type secondary battery is generally used as a gel-type or solid-type lithium ion polymer battery rather than a lithium ion secondary battery using an electrolyte having a leakage problem.

However, in order to make a pouch type secondary battery with a larger capacity to meet the demand on higher capacity of secondary batteries, an electrode assembly and an electrolyte should be contained such that a larger capacity is provided in a relatively smaller pouch. In addition, it is demanded to gradually decrease sealing portions around the pouch, which has no direct relation with battery capacity or accommodation. If the sealing width of a pouch package is reduced, an electrode assembly with a larger capacity may be accommodated in the pouch package, and the sealing portions having no direct relation with capacity may be reduced.

However, if the sealing area decreases due to the reduced sealing width, the sealing reliability of the pouch deteriorates, and long-term preservation stability deteriorates due to the penetration of external humidity, which results in deterioration of the performance of the secondary battery.

Therefore, in order to ensure long-term reliability of a secondary battery for humidity penetration, there is demanded a sealing condition which may restrict a content of humidity penetrating through the sealing portion during the demanded service life of the secondary battery below a predetermined level while minimizing the decrease of capacity of the secondary battery caused by the sealing portion.

### DISCLOSURE

### Technical Problem

The present disclosure is designed to solve the problems of the prior art, and therefore the present disclosure is directed to providing a pouch-type secondary battery in which a pouch package is sealed under a sealing condition capable of improving long-term reliability of the secondary battery for humidity penetration.

Other objects and advantages of the present disclosure will be understood from the following description and become more apparent by embodiments of the present disclosure. In addition, it could be easily understood that the objects and advantages of the present disclosure can be implemented by means and their combinations defined in the claims.

### Technical Solution

In one aspect of the present disclosure, there is provided a pouch-type secondary battery, which includes an electrode assembly to which an electrode lead is attached; and a pouch package accommodating the electrode assembly so that the electrode lead is partially exposed outwards, the pouch package having a sealing portion formed along an edge thereof, wherein the sealing portion has a characteristic length of 10 to 19 mm²/mm.

In the present disclosure, the characteristic length is defined as a value obtained by adding up characteristic lengths of an upper sealing portion, a lower sealing portion, a right sealing portion and a left sealing portion of the pouch package.

In addition, the characteristic length of each sealing portion is defined as a value obtained by dividing a sealing section area of the corresponding sealing portion by a sealing width of the corresponding sealing portion. Here, the sealing sectional area represents a sectional area of a thermal bonding layer formed between metal layers of the upper and lower sheets, which serve as a substrate, when the sealing portion is cut along the sealing direction.

Preferably, the service life of the secondary battery is set to be 15 years or more in view of the market requirement. In addition, the range of the characteristic length is set so that the internal resistance of the secondary battery increases less than 10% for 15 years due to the humidity penetrating through the sealing portion under a temperature of 25°C and a relative humidity of 80%.

If the characteristic length is determined according to the above conditions, even though the secondary battery is used for 15 years or more under a severe humidity condition, it is possible to prevent the performance of the secondary battery from deteriorating due to humidity penetration.

Here, in order to ensure the internal resistance of the secondary battery to be limited less than 10%, the concentration of humidity penetrating into the secondary battery is preferably limited to 2,500 ppm or below based on the electrolyte injected into the secondary battery.

In order to maintain the concentration of penetrating humidity at 2,500 ppm or less for 15 years under a normal temperature and a relative humidity of 80%, the content of humidity penetrating through the sealing portion for a day is preferably limited as '2,500 ppm/(365×15 day) = 0.4566 ppm/day'.

Hereinafter, the concentration of humidity is based on the concentration of electrolyte injected into the secondary battery, unless stated otherwise.

Meanwhile, regarding the range of the characteristic length, if the characteristic length is smaller than 10 mm²/mm, the humidity penetration content becomes 1,300 ppm or below, and the humidity penetration content of this level does not give a peculiar effect on the service life of the secondary battery. However, if the width of the sealing portion increases more than necessary, the area occupied by the sealing portion in comparison to the entire area of the pouch package increases, which reduces the capacity of the secondary battery or decreases the sealing section thickness or the size of the secondary battery more than necessary. On the contrary, if the characteristic length exceeds 19 mm²/mm, the humidity penetration content exceeds 2,500 ppm, which badly influences the service life of the secondary battery.

In the present disclosure, the pouch package is not limited to a quadrangular shape. Therefore, the calculation method of the characteristic length may be generalized as integrating 'an area of the sealing section/the sealing width' along the sealing portion, as obvious to those skilled in the art.

In addition, when calculating the characteristic length, components other than the thermal bonding layer of the sealing section are ruled out. Therefore, when calculating the characteristic length of the sealing portion at a side where an electrode lead is provided, the characteristic length is calculated by considering only the thermal bonding layer without considering the increase of thickness of the sealing section caused by the electrode lead. Therefore, at a portion where the electrode lead is present, the sectional area of the electrode lead is excluded from the sealing sectional area.

### Advantageous Effects

According to the present disclosure, since a characteristic length of a sealing portion of a pouch-type secondary battery is restricted to a predetermined range, it is possible to improve long-term reliability of the secondary battery for humidity penetration while suppressing the decrease of capacity of the secondary battery, caused by the area occupied by the sealing portion, to the minimum.

### DESCRIPTION OF DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings in which:
Figs. 1 and 2 are respectively a cross-sectional view and a plane view showing a conventional pouch-type secondary battery;
Fig. 3 is a plane view showing a pouch-type secondary battery for illustrating a characteristic length of a sealing portion according to an embodiment of the present disclosure;
Fig. 4 is a cross-sectional view taken along the line I-I' of Fig. 3; and
Fig. 5 is a graph showing estimation results of humidity penetration content during the service life of the pouch-type secondary battery under three temperature conditions according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the spirit and scope of the disclosure.

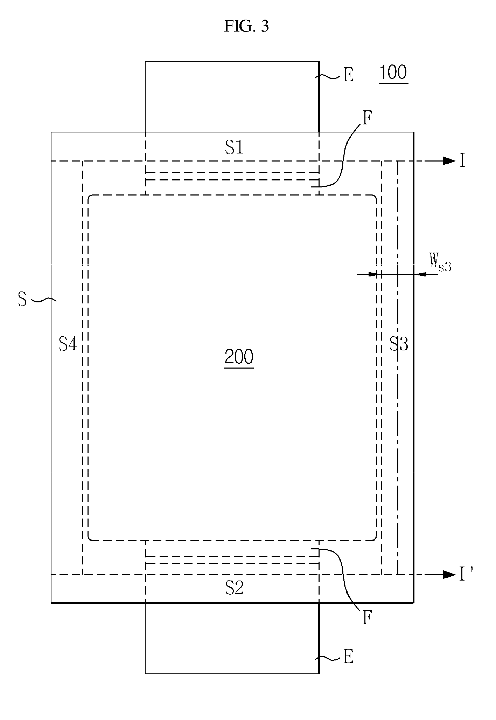

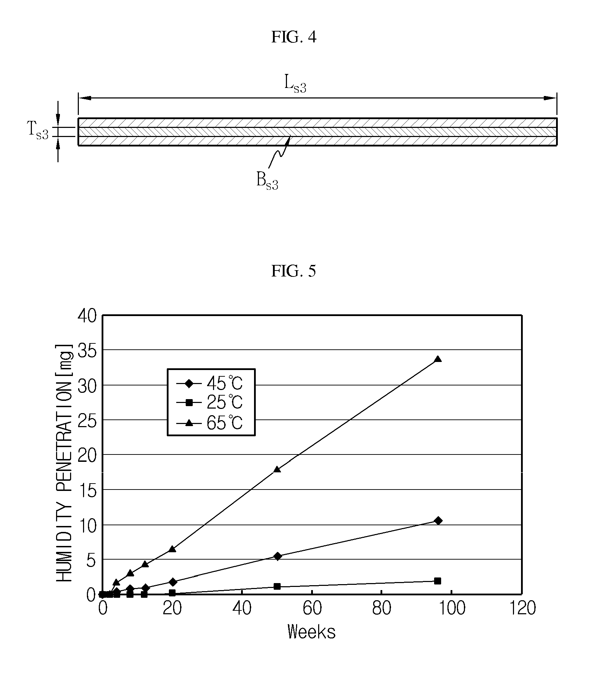

First, referring to Figs. 3 and 4, the concept of a characteristic length of a sealing portion of a pouch-type secondary battery will be described. Fig. 3 is a plane view showing a pouch-type secondary battery where a sealing process is completed, and Fig. 4 is a cross-sectional view taken along the line I-I' of Fig. 3.

As shown in Figs. 3 and 4, after a sealing process is completed, a sealing portion S with a constant width is formed at the periphery of a pouch-type secondary battery 100. The sealing portion S represents a thermal bonding layer formed at a contact portion of an upper sheet and a lower sheet of a pouch package when edges of the upper sheet and the lower sheet are thermally bonded during the sealing process.

The sealing portion S may be classified into an upper sealing portion S1, a lower sealing portion S2, a right sealing portion S3 and a left sealing portion S4 depending on sealing locations. Each of the sealing portions S1 to S4 has a constant sealing width and a constant sealing section along the sealing direction.

For example, the right sealing portion S3 has a sealing width corresponding to Wₛ₃. In addition, the right sealing portion S3 has a constant sealing section B_{S3} as shown in Fig. 4, when being cut along the line I-I'. The sealing section B_{S3} has a constant thickness T_{S3} and a constant length L_{S3} along the sealing direction. Therefore, the sealing section B_{S3} has an area A_{S3} corresponding to the multiplication of the thickness and the length.

The area A_{S3} of the sealing section B_{S3} is calculated by considering only the area occupied by the thermal bonding layer. Therefore, when calculating sealing section areas of the upper sealing portion S1 and the lower sealing portion S2 where electrode leads E are present, the area occupied by the electrode leads E is excluded. In other words, after a sealing section area is calculated including the area occupied by the electrode leads E, the sectional area of the electrode leads E is deducted to calculate the sealing section area of the corresponding portion.

The descriptions about the sealing width of the right sealing portion S3, the area of the sealing section, the thickness of the sealing section, the length of the sealing section or the like may be applied identically to sealing portions other than the right sealing portion S3. Therefore, when describing a sealing width of each sealing portion and an area, a thickness, a length or the like of its sealing section, they will be distinguished by adding the reference symbol of each sealing portion as a subscript. For example, the sealing width of the upper sealing portion S1 and the area, the thickness and the length of its sealing section will be respectively represented as Wₛ₁, Aₛ₁, Tₛ₁ and Lₛ₁.

In the present disclosure, a value obtained by dividing the sealing sectional area of each sealing portion by the sealing width is defined as a characteristic length CL of the corresponding sealing portion.

In other words, a characteristic length CLᵢ of an i^{th} sealing portion Si may be expressed like Equation 1 below.

### Equation 1

### characteristic length CLᵢ = A_{Si}/W_{Si}

Therefore, the characteristic length of the pouch-type secondary battery shown in Fig. 1 may be defined as 'CL₁+ CL₂+ CL₃+ CL₄'. Table 1 shows examples of actual calculated characteristic lengths when a sealing width W*_{Si}*, a thickness T*_{Si}* of the sealing section and a length L*_{Si}* in the sealing direction are given to each sealing portion.

According to Table 1 below, the characteristic length will be 15.66, which is obtained by adding up the characteristic lengths of all sealing portions. For reference, the unit of the characteristic length is mm²/mm and will be not written below.

**Table 1**

| | sealing direction length (L, mm) | sealing section thickness (T, mm) | sealing section area (S, mm²) | sealing width (W, mm) | characteristic length (mm²/mm) |
|---|---|---|---|---|---|
| S1 | 130 | 0.2 | 26 | 6 | 4.33 |
| S2 | 130 | 0.2 | 26 | 6 | 4.33 |
| S3 | 250 | 0.14 | 35 | 10 | 3.5 |
| S4 | 250 | 0.14 | 35 | 10 | 3.5 |

According to the present disclosure, the characteristic length of the sealing portion S influences the content of humidity penetrating into the pouch package. Since humidity generally penetrates through the sealing section, if the sealing section is larger, the humidity penetration content is greater. In addition, for the penetration of humidity, humidity should pass through the thermal bonding layer as much as a distance corresponding to the sealing width by means of diffusion. Therefore, if the sealing width is greater, the humidity penetration content is smaller.

With this point of view, the characteristic length of the sealing portion S is preferably controlled within a suitable range. If the characteristic length is small, this means that the sealing section is small or the sealing width is great. Therefore, if the characteristic length is smaller, the humidity penetration content is smaller. However, if the characteristic length is small, the secondary battery has an excessively small size or the sealing width is too great, which reduces the capacity of the secondary battery. Therefore, it is preferred to set a suitable lowermost value for the characteristic length. In the present disclosure, the lowermost value of the characteristic length is set as 10. In this case, not only is it possible to suitably cope with the market requirement of a secondary battery size but also to control the decrease of capacity of the secondary battery caused by the sealing width.

If the characteristic length of the sealing portion is less than 10, when the secondary battery is used for 15 years under a relative humidity of 80% and a temperature of 25°C, the humidity penetration content through the sealing portion is 1,300 ppm or below. The humidity penetration content of this level does not give a peculiar effect on the service life of the secondary battery. However, if the width of the sealing portion increases more than necessary, the area occupied by the sealing portion in comparison to the entire area of the pouch package increases. In this case, the capacity of the secondary battery decreases or the thickness of the sealing section of the sealing portion or the size of the secondary battery decreases more than necessary.

Meanwhile, in order to increase the characteristic length, the area of the sealing section serving as a path for humidity penetration should increase. If the area of the sealing section is the same, the sealing width should decrease. However, in this case, the humidity penetration content may increase, which may cause problems in performance and safety of the secondary battery. Therefore, it is preferred to suitably set an uppermost value of the characteristic length.

The uppermost value of the characteristic length is set in consideration of the service life of the secondary battery in view of the market requirement. Preferably, the service life of the secondary battery is set as 15 years or more in view of market requirement, and the uppermost value of the characteristic length is set so that the internal resistance of the secondary battery increases less than 10% due to the humidity penetrating through the sealing portion when the secondary battery is used for 15 years under a temperature of 25°C and a relative humidity of 80%.

Here, in order to ensure the internal resistance of the secondary battery to be limited less than 10%, the content of humidity penetrating into the secondary battery is preferably limited to 2,500 ppm or below based on the electrolyte injected into the secondary battery.

In order to maintain the humidity penetration content at 2,500 ppm or less for 15 years under a temperature of 25°C and a relative humidity of 80%, the content of humidity penetrating through the sealing portion for a day is preferably limited as '2,500 ppm/(365×15 day) = 0.4566 ppm/day'.

To meet such conditions, the material of the thermal bonding layer of the pouch package should be suitably selected. Preferably, the thermal bonding layer of the pouch package may be made of modified polyolefin resin such as cast polypropylene (CPP), terpolymer of polypropylene, butylene and ethylene, or the like. However, the present disclosure is not limited thereto.

In the present disclosure, the uppermost value of the characteristic length is set as 19 in order to meet the above humidity penetration conditions. In this case, even though the secondary battery is used under a severe humidity condition for 15 years or longer, it is possible to prevent the performance of the secondary battery from deteriorating due to the humidity penetration. On the contrary, if the characteristic length of the sealing portion exceeds 19, when the secondary battery is used for a long term, the humidity penetration content may exceed 2,500 ppm, which may badly influence the performance of the secondary battery.

The characteristic length of the sealing portion is not peculiarly influenced by the size of the secondary battery. However, the characteristic length of the sealing portion may be considered as a parameter applied to a large cell having an area greater than 10,000 mm², preferably 20 000 mm², except for the sealing portion. Such a large cell may be used as a large-sized battery for an electric vehicle, a large-sized battery for a mass-storage power storage device, a large-sized battery for an uninterruptible power supply, or the like.

If the characteristic length of the sealing portion is controlled within the range proposed in the present disclosure, the sealing conditions may be easily optimized. In other words, if capacity and size of a secondary battery to be manufactured are decided, the sealing width of the pouch package and the area of the sealing section are adjusted so that the characteristic length of the sealing portion is in the range of 10 to 19. In this case, the long-term reliability of the secondary battery for humidity penetration may be easily ensured even though experiments are not repeatedly performed for trial and error.

For example, it is assumed that the characteristic length of the sealing portion is calculated to be 20 as an initial design condition. In this case, if the sealing width of the sealing portion is suitably increased (for example, the sealing width is increased by 10%) so that the characteristic length of the sealing portion becomes 19 or less, the long-term reliability of the secondary battery for humidity penetration may be easily ensured even though experiments are not repeatedly performed for trial and error.

As another example, it is assumed that the characteristic length of the sealing portion is calculated to be 15 as an initial design condition. In this case, even though the characteristic length is within the range of 10 to 19, but a margin of 4 is present from the uppermost value of 19. Therefore, the sealing width may be suitably decreased so that the characteristic length of the sealing portion is adjusted close to 19. If the characteristic length of the sealing portion comes close to 19 by decreasing the sealing width, the long-term reliability of the secondary battery for humidity penetration may be ensured while extending the capacity of the secondary battery to the maximum under a given design condition of the secondary battery. On the contrary, if the secondary battery is used under a severe humidity condition, the characteristic length of the sealing portion may also be adjusted robuster against humidity. In other words, if the sealing width of the sealing portion is suitably increased so that the characteristic length decreases close to 10, the resistance of the secondary battery for humidity penetration may be further enhanced while adjusting the characteristic length of the sealing portion within a preferred range even though experiments are not repeatedly performed for trial and error.

As still another example, it is assumed that the characteristic length of the sealing portion is calculated to be 8 as an initial design condition. In this case, the characteristic length of the sealing portion is out of the characteristic length range according to the embodiment of the present disclosure. Therefore, the characteristic length of the sealing portion may be increased over 10 by reducing the sealing width of the sealing portion. If so, the capacity of the secondary battery may be increased by reducing the sealing width of the sealing portion while ensuring the long-term reliability of the secondary battery for humidity penetration even though experiments are not repeatedly performed for trial and error.

In the present disclosure, the pouch package is not limited to a quadrangular shape. Therefore, the calculation method of the characteristic length may be generalized as integrating 'an area of the sealing section/the sealing width' along the sealing portion, as obvious to those skilled in the art.

In the present disclosure, an electrode assembly 200 is accommodated in the pouch package. The electrode assembly 200 is an assembly of unit cells. The unit cell includes a cathode plate coated with cathode active material, an anode plate coated with anode active material, and a separator for electrically isolating the cathode plate and the anode plate from each other and allowing the transfer of lithium ions. In addition, the cathode active material and the anode active material may be used for coating one surface or both surfaces of the cathode plate and the anode plate. Moreover, a separator may be further interposed between adjacent unit cells for electric insulation. The unit cell may have either a bi-cell structure where outermost electrodes have the same polarity or a full-cell structure where outermost electrodes have opposite polarities.

The electrode assembly 200 may have various structures according to a stacking type of unit cells. In other words, the electrode assembly 200 may have a simple stacking structure, a stacking/folding structure, a jelly-roll structure or the like. Here, the simple stacking structure represents a structure where a plurality of unit cells is stacked in order. In addition, the stacking/folding structure represents a structure where a plurality of unit cells is disposed on a band-type separator at regular intervals and rolled in one direction so that unit cells are inserted between every folded separator portions. Moreover, the jelly-roll structure represents a structure where a unit cell is prepared in a band shape and the unit cell is rolled in one direction.

The electrode assembly 200 includes electrode tabs F respectively extending from the electrode plates and having different polarities. The electrode tab F is welded to an electrode lead E made of the same material as the electrode plate and having the same polarity as the electrode plate. In other words, the cathode tab corresponding to a cathode is coupled to a cathode lead, and the anode tab corresponding to an anode is coupled to an anode lead.

An electrolyte containing lithium salt is included in the pouch package for the operation of the secondary battery. The electrolyte may be in any type, for example a liquid type, a gel type, a solid type or the like, known in the art.

### Experimental Examples

Hereinafter, the present disclosure will be described in more detail based on experimental examples. However, the following experimental examples are just for exemplarily illustrating the present disclosure and not intended to limit the scope of the present disclosure.

First, the inventors of this application have experimentally proved that the humidity penetration content increases in proportion to the service life of the pouch-type secondary battery.

For the experiment, a sample cell having the same pouch volume and electrolyte amount as a pouch-type lithium secondary battery having a discharge capacity of 5 Ah and a cell area of 30,000 mm² (120mmx250mm) was prepared.

The pouch film used for packing the secondary battery includes a substrate layer and a thermal bonding layer, respectively made of aluminum and modified polypropylene. The characteristic length of the sealing portion of the sample cell was calculated to be 14.

The humidity penetration experiment was performed so that a secondary battery was left alone in a chamber under an atmospheric pressure, which maintains a relative humidity of 80% at three temperature conditions of 25°C, 45°C and 60°C, and then HF and humidity content were measured at every time interval. Since 1 mole of H₂O penetrating into the cell generates 2 moles of HF, the content of humidity remaining in the electrolyte and 1/2 of the content of HF correspond to the content of humidity penetrating from the outside.

Fig. 5 shows changes of the humidity penetration content in the secondary battery as time passes. As shown in Fig. 5, it may be found that the humidity penetration content increases linearly at three temperature conditions.

In this experiment, the changing pattern of the humidity penetration content was measured under three temperature conditions till about 100 weeks. However, it is estimated that the humidity penetration content will exhibit the same changing pattern after 100 weeks.

The humidity penetration content is generally determined according to a diffusion coefficient of humidity in the thermal bonding layer of the pouch package. Therefore, if temperature and pressure are maintained consistently and a humidity diffusion mechanism through the thermal bonding layer is stabilized into an equilibrium state, the reliability of the experiment results will not be greatly influenced even though the diffusion coefficient is considered as a proportional constant.

Next, by considering the linear increase of the humidity penetration content as described above, it is estimated how the humidity penetration content of the secondary battery changes and how the internal resistance increases, according to the change of the characteristic length of the sealing portion, when the secondary battery is used for 15 years. In this way, the meaningfulness of the characteristic length proposed in the present disclosure will be verified.

### Example 1

A pouch-type secondary battery having a discharge capacity of 5 Ah and a cell area of 30,000 mm² (120mmx250mm) was prepared. A basic structure of the pouch-type secondary battery is the same as shown in Fig. 3.

The pouch package used for making the secondary battery includes a substrate layer and a thermal bonding layer, respectively made of aluminum and modified polypropylene. The characteristic length of the sealing portion formed at the periphery of the pouch package during a sealing process was calculated to be 19. Under a temperature of 25°C and a relative humidity of 80%, the content of humidity penetrating into the secondary battery for a day was measured to be 0.4566 ppm/day. Further, based on the humidity penetration content for a day, the total humidity penetration content for 15 years was estimated in a proportional relation. As a result of estimation, the humidity penetration content for 15 years was calculated to be 2,500 ppm. Based on the calculation result of the humidity penetration content, the increase of resistance was estimated by using a look-up table where humidity penetration content of each internal resistance increase rate is defined. As a result of calculating the increase of resistance of the secondary battery corresponding to the case where the humidity penetration content is 2,500 ppm with reference to the look-up table, the increase of resistance was estimated to be 7.60%.

### Example 2

A pouch-type secondary battery was prepared under the same condition as Example 1, except that the sealing width of the sealing portion was adjusted during the sealing process of the secondary battery so that the characteristic length of the sealing portion is 18.

For the secondary battery of Example 2, under a temperature of 25°C and a relative humidity of 80%, the content of humidity penetrating into the secondary battery for a day was measured to be 0.4292 ppm/day. Based on the humidity penetration content for a day, the total humidity penetration content for 15 years was estimated in a proportional relation and calculated to be 2,350 ppm. In addition, by using the look-up table, the increase of resistance of the secondary battery corresponding to the case where the humidity penetration content is 2,350 ppm was estimated to be 7.40%.

### Example 3

A pouch-type secondary battery was prepared under the same condition as Example 1, except that the sealing width of the sealing portion was adjusted during the sealing process of the secondary battery so that the characteristic length of the sealing portion is 15.

For the secondary battery of Example 3, under a temperature of 25°C and a relative humidity of 80%, the content of humidity penetrating into the secondary battery for a day was measured to be 0.3561 ppm/day. Based on the humidity penetration content for a day, the total humidity penetration content for 15 years was estimated in a proportional relation and calculated to be 1,950 ppm. In addition, by using the look-up table, the increase of resistance of the secondary battery corresponding to the case where the humidity penetration content is 1,950 ppm was estimated to be 6.1%.

### Example 4

A pouch-type secondary battery was prepared under the same condition as Example 1, except that the sealing width of the sealing portion was adjusted during the sealing process of the secondary battery so that the characteristic length of the sealing portion is 14.

For the secondary battery of Example 4, under a temperature of 25°C and a relative humidity of 80%, the content of humidity penetrating into the secondary battery for a day was measured to be 0.3287 ppm/day. Based on the humidity penetration content for a day, the total humidity penetration content for 15 years was estimated in a proportional relation and calculated to be 1,800 ppm. In addition, by using the look-up table, the increase of resistance of the secondary battery corresponding to the case where the humidity penetration content is 1,800 ppm was estimated to be 5.3%.

### Example 5

A pouch-type secondary battery was prepared under the same condition as Example 1, except that the sealing width of the sealing portion was adjusted during the sealing process of the secondary battery so that the characteristic length of the sealing portion is 10.

For the secondary battery of Example 5, under a temperature of 25°C and a relative humidity of 80%, the content of humidity penetrating into the secondary battery for a day was measured to be 0.2374 ppm/day. Based on the humidity penetration content for a day, the total humidity penetration content for 15 years was estimated in a proportional relation and calculated to be 1,300 ppm. In addition, by using the look-up table, the increase of resistance of the secondary battery corresponding to the case where the humidity penetration content is 1,300 ppm was estimated to be 4.8%.

### Comparative Example 1

A pouch-type secondary battery was prepared under the same condition as Example 1, except that the sealing width of the sealing portion was adjusted during the sealing process of the secondary battery so that the characteristic length of the sealing portion is 20.

For the secondary battery of Comparative Example 1, under a temperature of 25°C and a relative humidity of 80%, the content of humidity penetrating into the secondary battery for a day was measured to be 0.4748 ppm/day. Based on the humidity penetration content for a day, the total humidity penetration content for 15 years was estimated in a proportional relation and calculated to be 2,600 ppm. In addition, by using the look-up table, the increase of resistance of the secondary battery corresponding to the case where the humidity penetration content is 2,600 ppm was estimated to be 10.80%.

### Comparative Example 2

A pouch-type secondary battery was prepared under the same condition as Example 1, except that the sealing width of the sealing portion was adjusted during the sealing process of the secondary battery so that the characteristic length of the sealing portion is 23.

For the secondary battery of Comparative Example 2, under a temperature of 25°C and a relative humidity of 80%, the content of humidity penetrating into the secondary battery for a day was measured to be 0.5479 ppm/day. Based on the humidity penetration content for a day, the total humidity penetration content for 15 years was estimated in a proportional relation and calculated to be 3,000 ppm. In addition, by using the look-up table, the increase of resistance of the secondary battery corresponding to the case where the humidity penetration content is 3,000 ppm was estimated to be 12.3%.

### Comparative Example 3

A pouch-type secondary battery was prepared under the same condition as Example 1, except that the sealing width of the sealing portion was adjusted during the sealing process of the secondary battery so that the characteristic length of the sealing portion is 9.

For the secondary battery of Comparative Example 3, under a temperature of 25°C and a relative humidity of 80%, the content of humidity penetrating into the secondary battery for a day was measured to be 0.2191 ppm/day. Based on the humidity penetration content for a day, the total humidity penetration content for 15 years was estimated in a proportional relation and calculated to be 1,200 ppm. In addition, by using the look-up table, the increase of resistance of the secondary battery corresponding to the case where the humidity penetration content is 1,200 ppm was estimated to be 4.5%.

### Comparative Example 4

A pouch-type secondary battery was prepared under the same condition as Example 1, except that the sealing width of the sealing portion was adjusted during the sealing process of the secondary battery so that the characteristic length of the sealing portion is 8.

For the secondary battery of Comparative Example 4, under a temperature of 25°C and a relative humidity of 80%, the content of humidity penetrating into the secondary battery for a day was measured to be 0.1899 ppm/day. Based on the humidity penetration content for a day, the total humidity penetration content for 15 years was estimated in a proportional relation and calculated to be 1,040 ppm. In addition, by using the look-up table, the increase of resistance of the secondary battery corresponding to the case where the humidity penetration content is 1,040 ppm was estimated to be 4.3%.

According to the experimental examples above, it may be understood that if the characteristic length of the sealing portion formed during the sealing process of the pouch-type secondary battery exceeds 19, when the secondary battery is used for a long term over 15 years, the humidity penetration content exceeds 2,500 ppm and therefore the long-term reliability for humidity penetration is not ensured.

Therefore, it will be understood that a pouch-type secondary battery may be desirably manufactured when a sealing portion is formed by using a pouch package with a thermal bonding layer, where a sealing sectional area and a sealing width are limited so that the characteristic length of the sealing portion is not smaller than 10 and not greater than 19 and the humidity penetration content for a day is 0.4566 ppm/day or below.

The present disclosure has been described in detail. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

## Claims

1. A pouch-type secondary battery, comprising:
an electrode assembly to which an electrode lead is attached; and
a pouch package accommodating the electrode assembly so that the electrode lead is partially exposed outwards, the pouch package having a sealing portion formed along an edge thereof,
wherein the sealing portion has a characteristic length of 10 to 19 mm²/mm.

2. The pouch-type secondary battery according to claim 1,
wherein the secondary battery has a humidity penetration content of 0.4566 ppm/day or less under a relative humidity of 80% and a temperature of 25°C.

3. The pouch-type secondary battery according to claim 1,
wherein for 15 years under a relative humidity of 80% and a temperature of 25°C, the secondary battery has a humidity penetration content of 2,500 ppm or less through the sealing portion, and an internal resistance increases less than 10% due to humidity penetration.

4. The pouch-type secondary battery according to claim 1,
wherein the characteristic length is obtained by integrating 'an area of a sealing section/a sealing width ' of the sealing portion along the sealing portion.

5. The pouch-type secondary battery according to claim 1,
wherein the pouch package has a quadrangular shape, and
wherein the characteristic length is obtained by adding up characteristic lengths of an upper sealing portion, a lower sealing portion, a right sealing portion and a left sealing portion.

6. The pouch-type secondary battery according to claim 1,
wherein the pouch package has a thermal bonding layer made of a modified polyolefin resin.
